# EUROPÄISCHE PATENTSCHRIFT

(11) **EP 1 842 621 B1**
(45) Veröffentlichungstag und Bekanntmachung des Hinweises auf die Patenterteilung: **15.12.2010**
(21) Anmeldenummer: 06007281.6
(22) Anmeldetag: 06.04.2006
(51) Int. Cl.: B23Q 39/02, B27D 5/00

(54) **Bearbeitungsvorrichtung mit einer 5-Achs-Spindeleinheit**
Machining device with a 5-axes spindle unit
Machine d'usinage avec une unité de broche à 5 axes

(43) Veröffentlichungstag der Anmeldung: 10.10.2007
(73) Patentinhaber: Homag Holzbearbeitungssysteme AG, 72296 Schopfloch (DE)
(72) Erfinder: Gauß, Achim, 72280 Dornstetten (DE); Sturm, Gotthilf, 72293 Glatten (DE)
(74) Vertreter: HOFFMANN EITLE

(56) Entgegenhaltungen:
- EP-A- 0 993 903
- EP-A- 1 247 611
- DE-A1- 4 405 214
- DE-A1- 10 124 695
- DE-A1- 19 518 965

## Beschreibung

### Technisches Gebiet

Die Erfindung betrifft eine Bearbeitungsvorrichtung, insbesondere Bearbeitungszentrum zur Bearbeitung von Werkstücken, die bevorzugt zumindest teilweise aus Holz, Holzwerkstoffen, Kunststoff oder dergleichen bestehen, nach dem Oberbegriff von Anspruch 1.

### Stand der Technik

Bearbeitungsvorrichtungen der eingangs genannten Art finden bei der Herstellung von Möbeln, Küchen oder dergleichen breite Anwendung. So offenbart beispielsweise die DE 195 18 965 C2 eine gattungsgemäße Bearbeitungsvorrichtung in Form eines Bearbeitungszentrums mit zwei 4-Achs-Spindeleinheiten, die auf gegenüberliegenden Seiten eines Auslegers unabhängig verfahrbar angeordnet sind, wobei in zumindest eine der Spindeleinheiten ein Kantenanleimaggregat einwechselbar sein kann.

Derartige Bearbeitungszentren haben sich für die Bearbeitung von Werkstücken bewährt, die eine relativ einfache Geometrie (z. B. plattenförmig) besitzen und eine vergleichsweise einfache Kantenbearbeitung erfordern. Allerdings werden in dieser Hinsicht mittlerweile immer höhere Anforderungen gestellt, indem die Werkstücke völlig frei gestaltete Formen besitzen können und beispielsweise auch dreidimensional bearbeitet werden müssen (z. B. Kugelform). Derartige Werkstücke müssen dann auf separaten Maschinen nachbearbeitet werden.

Ferner offenbart die EP 1 247 611 A1 ein Bearbeitungszentrum mit zwei Spindeleinheiten, die auf gegenüberliegenden Seiten eines Auslegers angeordnet und gemeinsam entlang des Auslegers verfahrbar sind. In die Spindeleinheiten können unterschiedliche Bearbeitungsmittel eingewechselt werden.

Darüber hinaus offenbart die EP 0 993 903 A2 eine Maschine für die Holzbearbeitung mit mehreren Bearbeitungsspindeln, die entlang eines Führungsbalkens verfahrbar und auf gegenüberliegenden Seiten des Führungsbalkens angeordnet sind. Dabei ist eine Trennung der Gleitmittel (sliding means) von den Stützmitteln (rest means) vorgesehen.

### Darstellung der Erfindung

Es ist Aufgabe der vorliegenden Erfindung, bei einer Bearbeitungsvorrichtung der eingangs genannten Art die Flexibilität im Hinblick auf die Art der bearbeitbaren Werkstücke zu erhöhen.

Diese Aufgabe wird erfindungsgemäß durch eine Bearbeitungsvorrichtung mit den Merkmalen von Anspruch 1 gelöst. Besonders vorteilhafte Weiterbildungen der Erfindung sind in den abhängigen Ansprüchen angegeben.

Zu diesem Zweck ist erfindungsgemäß vorgesehen, dass die Bearbeitungsvorrichtung ferner eine zweite Spindeleinheit aufweist, die als 5-Achs-Spindeleinheit ausgebildet ist, die eine Spindel aufweist, welche um eine senkrecht zu Ihrer Erstreckungsrichtung verlaufende Achse schwenkbar ist. Auf diese Weise wird ermöglicht, dass mit der erfindungsgemäßen Bearbeitungsvorrichtung Werkstücke mit einer praktisch beliebigen Form bzw. Kantengeometrie mit einer Kante versehen und nachbearbeitet werden können. Dies führt zu einer extrem gesteigerten Flexibilität der erfindungsgemäßen Bearbeitungsvorrichtung, die zusätzliche Nachbearbeitungsstationen entbehrlich macht.

Weitere Vorteile der Erfindung werden anhand der nachfolgenden ausführlichen Beschreibung noch näher ersichtlich werden.

### Kurze Beschreibung der Zeichnungen

- Fig. 1: zeigt eine schematische Draufsicht einer Bearbeitungsvorrichtung als erste Ausführungsform der vorliegenden Erfindung;
- Fig. 2: zeigt eine schematische Draufsicht einer Bearbeitungsvorrichtung als zweite Ausführungsform der vorliegenden Erfindung;
- Fig. 3: zeigt eine schematische, teilweise Perspektivansicht einer im Rahmen der vorliegenden Erfindung einsetzbaren Spindeleinheit.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

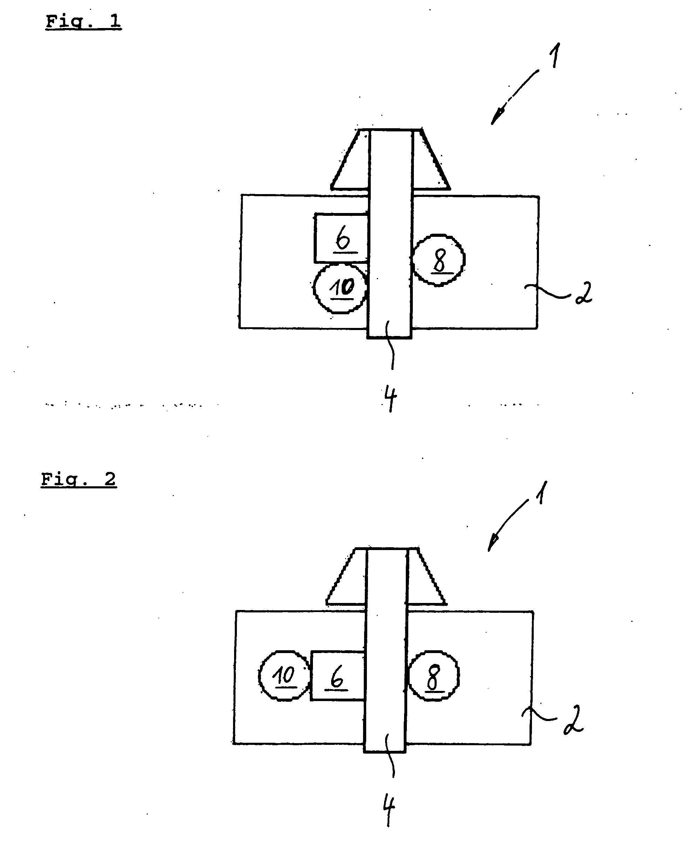

Eine Bearbeitungsvorrichtung 1 als erste bevorzugte Ausführungsform der vorliegenden Erfindung ist in Fig. 1 schematisch in einer Draufsicht gezeigt. Bei dieser Bearbeitungsvorrichtung 1 handelt es sich um ein so genanntes Bearbeitungszentrum, das zur Bearbeitung von Werkstücken dient, die bevorzugt zumindest teilweise aus Holz, Holzwerkstoffen, Kunststoff oder dergleichen bestehen, wie beispielsweise Möbelfronten, Arbeitsplatten und dergleichen. Derartige Werkstücke werden häufig zunächst spanend bearbeitet, anschließend mit einem Beschichtungs- bzw. Kantenmaterial versehen und daraufhin im Bereich des aufgebrachten Materials nachbearbeitet. Alle diese Schritte können in dem erfindungsgemäßen Bearbeitungszentrum ausgeführt werden. Dabei ermöglicht das erfindungsgemäße Bearbeitungszentrum die Bearbeitung unterschiedlichster Werkstückgeometrien, wobei auch komplizierte dreidimensionale Strukturen bearbeitet werden können.

Das gezeigte Bearbeitungszentrum 1 umfasst einen Aufspanntisch 2 zur Aufspannung der zu bearbeitenden Werkstücke (die hier nicht näher gezeigt sind) und eine balkenförmige Führungseinrichtung 4, die in der vorliegenden Ausführungsform als Ausleger gebildet ist. Es ist jedoch zu beachten, dass die balkenförmige Führungseinrichtung beispielsweise auch als Portal und auf andere Weise konstruiert sein kann. Die balkenförmige Führungseinrichtung 4 erstreckt sich über den gesamten Aufspanntisch 2 und ist in der vorliegenden Ausführungsform in Bezug auf den Aufspanntisch 2 verfahrbar, und zwar in einer Richtung von links nach rechts in Fig. 1. Alternativ oder zusätzlich ist es jedoch ebenso möglich, dass der Aufspanntisch 2 in dieser Richtung in Bezug auf die balkenförmige Führungseinrichtung 4 verfahrbar ist, was sich insbesondere bei portalartigen Führungseinrichtung 4 anbietet.

Auf der linken Seite der Führungseinrichtung 4 ist eine erste Spindeleinheit 6 angeordnet, die als 4-Achs-Spindeleinheit ausgebildet ist. Dies bedeutet, dass das Spindelgehäuse, welches die Spindel lagert, in drei translatorischen Achsen und einer rotatorischen Achse verfahren werden kann, wobei sich die rotatorische Achse in der vorliegenden Ausführungsform senkrecht zur Zeichenebene von Fig. 1 erstreckt ("C"-Achse). Dabei wird die Verfahrbarkeit der ersten Spindeleinheit 6 in einer ersten Richtung durch die Relativverfahrbarkeit der Führungseinrichtung 4 und des Aufspanntisches 2 erreicht, und die beiden anderen translatorischen Verfahrwege werden durch ein Verfahren der ersten Spindeleinheit 6 entlang bzw. an der Führungseinrichtung 4 erreicht.

In die erste Spindeleinheit 6 können unterschiedlichste Bearbeitungswerkzeuge und Bearbeitungsaggregate eingewechselt werden, wie beispielsweise Fräswerkzeuge, Ziehklingen, Bündigfräsaggregate, Bohreinheiten, etc.

Auf der gegenüberliegenden Seite der Führungseinrichtung 4 (rechts in Fig. 1) ist ferner eine Kantenanleimeinrichtung 8 angeordnet, die in der vorliegenden Ausführungsform durch eine Spindeleinheit gebildet ist, in welche ein Kantenanleimaggregat einwechselbar ist. Es kann sich jedoch hierbei ebenso um eine fest aufgebaute Kantenanleimeinrichtung 8 handeln.

Weiterhin umfasst die Bearbeitungsvorrichtung 1 eine zweite Spindeleinheit 10, die ebenfalls auf der ersten Seite der Führungseinrichtung 4 (links in Fig. 1) angeordnet und als 5-Achs-Spindeleinheit ausgebildet ist. Dies bedeutet, dass die zweite Spindeleinheit 10 zusätzlich zu den Verfahrachsen der ersten Spindeleinheit 6 eine Schwenkachse, einen Kardankopf oder dergleichen aufweist, um welche die Spindel senkrecht zu ihrer Erstreckungsrichtung schwenkbar ist. Hierdurch ermöglicht die zweite Spindeleinheit 10 die Ausführung zusätzlicher Bearbeitungsvorgänge, die mit der ersten Spindeleinheit 6 nicht ausgeführt werden können, wie beispielsweise die Erstellung von Freiformen, Kugeln etc. Auf diese Weise wird die Flexibilität der erfindungsgemäßen Bearbeitungsvorrichtung erheblich gesteigert.

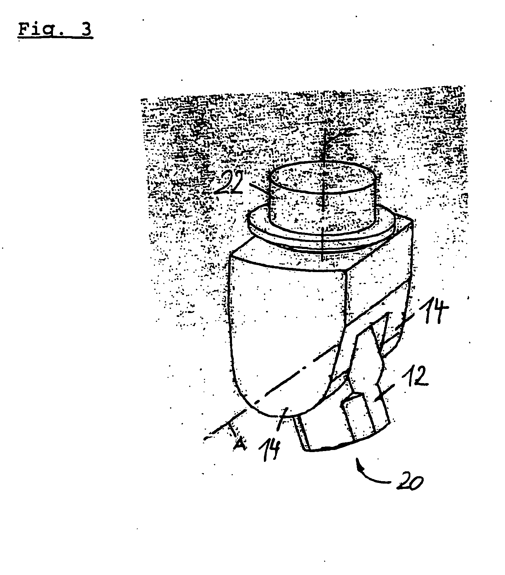

Die Ausbildung der Schwenkachse der zweiten Spindeleinheit 10 ist in Fig. 3 in einer teilweisen Perspektivansicht näher gezeigt. Wie in Fig. 3 näher zu erkennen ist, ist die Spindel der zweiten Spindeleinheit 10 in einem Spindelgehäuse 12 vorgesehen, das an einem Gabelkopf 14 (oder ggf. Kardankopf oder dergleichen) schwenkbar angeordnet ist. Auf diese Weise kann die Werkzeugaufnahme 20 der Spindel in Kombination mit der Verdrehbarkeit der Gesamteinheit um die in Fig. 3 gezeigte Achse "C" in eine beliebige Dreh- und Verschwenkposition gebracht werden. Hierdruch können auch Werkstücke mit sehr komplizierten Geometrien bearbeitet werden.

Die zweite Spindeleinheit 10 ist betrieblich mit der ersten Spindeleinheit 6 gekoppelt entlang der Führungseinrichtung verfahrbar .

Eine Bearbeitungsvorrichtung 1 als zweite bevorzugte Ausführungsform der vorliegenden Erfindung ist schematisch in Fig. 2 in einer Draufsicht gezeigt. Diese unterscheidet sich von der in Fig. 1 gezeigten Ausführungsform dadurch, dass die zweite Spindeleinheit 10 nicht direkt an der Führungseinrichtung 4, sondern an der ersten Spindeleinheit 6 angebracht ist. Hierdurch vereinfacht sich die Konstruktion der erfindungsgemäßen Bearbeitungsvorrichtung erheblich. Dabei kann die zweite Spindeleinheit 10 jedoch zumindest in einer sich senkrecht zur Zeichenebene in Fig. 2 erstreckenden Richtung unabhängig von der ersten Spindeleinheit 6 verfahrbar sein, beispielsweise durch eine zwischen beiden Spindeleinheiten angeordnete Verfahranordnung.

## Patentansprüche

1. Bearbeitungsvorrichtung (1), insbesondere Bearbeitungszentrum zur Bearbeitung von Werkstücken, die bevorzugt zumindest teilweise aus Holz, Holzwerkstoffen, Kunststoff oder dergleichen bestehen, mit:
einem Aufspanntisch (2) zur Aufspannung der zu bearbeitenden Werkstücke,
einer balkenförmigen Führungseinrichtung (4), die sich zumindest abschnittsweise über den Aufspanntisch (2) erstreckt, wobei der Aufspanntisch (2) und die balkenförmige Führungseinrichtung (4) in zumindest einer ersten Richtung in Bezug zueinander verfahrbar sind,
einer ersten Spindeleinheit (6), die als 4-Achs-Spindeleinheit ausgebildet auf einer ersten Seite der Führungseinrichtung (4) in zumindest einer zweiten Richtung verfahrbar angeordnet ist, wobei
die Bearbeitungsvorrichtung ferner eine zweite Spindeleinheit (10) aufweist,
**dadurch gekennzeichnet, dass**
die Bearbeitungsvorrichtung eine Kantenanleimeinrichtung (8) aufweist, die auf einer der ersten Seite gegenüberliegenden zweiten Seite der Führungseinrichtung (4) angeordnet ist,
die zweite Spindeleinheit als 5-Achs-Spindeleinheit ausgebildet ist, die eine Spindel aufweist, welche um eine senkrecht zu Ihrer Erstreckungsrichtung verlaufende Achse schwenkbar ist, wobei
die zweite Spindeleinheit (10) auf der ersten Seite der Führungseinrichtung (4) angeordnet ist und mit der ersten Spindeleinheit zum Verfahren entlang der Führungseinrichtung gekoppelt ist.

2. Bearbeitungsvorrichtung nach Anspruch 1, **dadurch gekennzeichnet, dass** die zweite Spindeleinheit (10) an der ersten Spindeleinheit (6) angebracht ist.

3. Bearbeitungsvorrichtung nach einem der vorhergehenden Ansprüche, **dadurch gekennzeichnet, dass** die zweite Spindeleinheit (10) derart angeordnet ist, dass sie unabhängig von der ersten Spindeleinheit (6) in einer dritten Richtung verfahrbar ist, die sich im Wesentlichen senkrecht zum Aufspanntisch erstreckt.

4. Bearbeitungsvorrichtung nach einem der vorhergehenden Ansprüche, **dadurch gekennzeichnet, dass** die Spindel der zweiten Spindeleinheit (10) in einem Spindelgehäuse (12) vorgesehen ist, das an einem Gabelkopf (14) schwenkbar angeordnet ist.

5. Bearbeitungsvorrichtung nach einem der vorhergehenden Ansprüche, **dadurch gekennzeichnet, dass** die Führungseinrichtung (4) als Portal oder Ausleger ausgebildet ist.

## Claims

1. Processing apparatus (1), in particular processing centre for processing work pieces which are preferably at least partially made of timber, derived timber products, plastic or the like, having:
a mounting table (2) for mounting the work pieces to be processed,
a beam-like guide device (4) which extends at least in one section over the mounting table (2), the mounting table (2) and the beam-like guide device (4) being movable in relation to each other in at least a first direction,
a first spindle unit (6) which is designed as a four-axis spindle unit and arranged on a first side of the guide device (4) so as to be movable in at least a second direction,
the processing apparatus further having a second spindle unit (10),
**characterised in that**
the processing apparatus has an edge gluing machine (8) which is arranged on a second side of the guide device (4) opposite the first side,
the second spindle unit is designed as a five-axis spindle unit which has a spindle which is pivotable about an axis running perpendicularly to the direction in which it extends,
the second spindle unit (10) being arranged on the first side of the guide device (4) and coupled to the first spindle unit for moving along the guide device.

2. Processing apparatus according to claim 1, **characterised in that** the second spindle unit (10) is mounted on the first spindle unit (6).

3. Processing apparatus according to any of the preceding claims, **characterised in that** the second spindle unit (10) is arranged so as to be movable, independently of the first spindle unit (6), in a third direction which extends substantially perpendicularly to the mounting table.

4. Processing apparatus according to any of the preceding claims, **characterised in that** the spindle of the second spindle unit (10) is provided in a spindle housing (12) which is arranged pivotably on a fork head (14).

5. Processing apparatus according to any of the preceding claims, **characterised in that** the guide device (4) is designed as a portal or arm.

## Revendications

1. Dispositif d'usinage (1), en particulier centre d'usinage pour l'usinage de pièces d'oeuvre, composées de préférence au moins partiellement de bois, matériaux ligneux, matière synthétique ou analogue, avec :
une table de bridage (2), pour brider les pièces d'oeuvre à usiner,
un dispositif de guidage (4) en forme de poutre, s'étendant, au moins par tronçons, au-dessus de la table de bridage (2), la table de bridage (2) et le dispositif de guidage (4) en forme de poutre étant déplaçables l'un par rapport à l'autre, en au moins une première direction,
une première unité à broche (6), réalisée sous la forme d'unité à broche à 4 axes sur un premier côté du dispositif de guidage (4), déplaçable en au moins une deuxième direction, où
le dispositif d'usinage présente en outre une deuxième unité à broche (10),
**caractérisé en ce que**
le dispositif d'usinage présente un dispositif d'encollage de chant (8), disposé sur un deuxième côté, opposé au premier côté, du dispositif de guidage (4),
la deuxième unité à broche est réalisée sous forme d'unité à broche à 5 axes, présentant une broche susceptible de pivoter autour d'un axe s'étendant perpendiculairement à sa direction d'étendue, où
la deuxième unité à broche (10) est disposée sur le premier côté du dispositif de guidage (4) et couplée à la première unité à broche, pour déplacement le long du dispositif de guidage.

2. Dispositif d'usinage selon la revendication 1, **caractérisé en ce que** la deuxième unité à broche (10) est montée sur la première unité à broche (6).

3. Dispositif d'usinage selon l'une des revendications précédentes, **caractérisé en ce que** la deuxième unité à broche (10) est disposée de manière à être déplaçable indépendamment de la première unité à broche (6), dans une troisième direction s'étendant sensiblement perpendiculairement à la table de bridage.

4. Dispositif d'usinage selon l'une des revendications précédentes, **caractérisé en ce que** la broche de la deuxième unité à broche (10) est prévue dans un boîtier à broche (12), disposé à pivotement sur une tête de fourche (14).

5. Dispositif d'usinage selon l'une des revendications précédentes, **caractérisé en ce que** le dispositif de guidage (4) est réalisé sous forme de portique ou de bras articulé.
